# EUROPEAN PATENT SPECIFICATION

(11) **EP 3 091 244 B1**
(45) Date of publication and mention of the grant of the patent: **28.02.2018**
(21) Application number: 15166521.3
(22) Date of filing: 06.05.2015
(51) Int. Cl.: F16D 13/75, F16D 25/12

(54) **APPARATUS FOR WEAR COMPENSATION FOR AN ACTUATOR**
VORRICHTUNG ZUR VERSCHLEISSKOMPENSIERUNG FÜR EINEN AKTUATOR
APPAREIL DE COMPENSATION D'USURE POUR UN ACTIONNEUR

(43) Date of publication of application: 09.11.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Trencseni, Balazs, 1037 Budapest (HU); Németh, Huba, 1116 Budapest (HU); Szucs, Gábor, 6000 Kecskemét (HU)

(56) References cited:
- CN-U- 202 273 170
- FR-A1- 2 971 309
- US-A- 4 653 272

## Description

The present invention relates to an apparatus for wear compensation for an actuator and, in particular, to an apparatus providing an actuator with an unchanged initial position over wear of, for example, a clutch disc.

### Background

A clutch plays an important role in vehicle driveline systems. It is used to transmit a torque in a controlled way by an actuator module that disengages and engages a pretensioned or pre-strained clutch mechanism. Over time there is a significant wear and tear of the clutch friction disc caused by the clutch operation that leads to a reduction of its thickness over time. This modification of the geometry leads to variable conditions of operation of the clutch actuator module. The initial position of the clutch module (e.g. the fully-engaged clutch) depends on the thickness of the disc and, therefore, should be adjusted in accordance with the clutch wear. Otherwise, the clutch would remain partly open and the required torque cannot be transmitted correctly. On the other hand, also the fully disengaged clutch will be modified by the wear and tear over the time. This modification is equal to the initial position of the fully engaged clutch plus a positional deviation (operation stroke).

As a consequence of this wear and tear, the performance of the actuator depends on the initial condition, and thus, may deteriorate if the initial condition of the actuator has shifted in order to keep the transferable torque level constant while the thickness of the clutch changes. The performance of the actuator may be specified by dynamic aspects (for example, how much time is needed from a fully engaged clutch to a fully disengaged clutch or vice-versa), accuracy aspects (for example, what is the extent of deviation between a required and an achieved position of the release bearing or linked parts), or by any other aspects.

In order to avoid changes of the initial conditions of the actuator, an additional adjustor may be applied between the force transferring element of the actuator and the release bearing of the clutch. EP 0 561 506 A1 discloses such a self-adjusting clutch actuator, wherein a hydraulic adjustment assembly is used for an axial adjustment. The hydraulic adjustment assembly uses two chambers, which are connected by a channel with a valve there-between such that the fluid passing from one chamber to the other chamber will modify the actuator length. WO 2012/119612 discloses a further conventional self-adjusting clutch actuator using a mechanical clutch adjustor, wherein a locked friction increases due to deformation caused by the actuation force.

Although these solutions compensate for wear of friction elements in linear actuators such as clutches, these solutions are disadvantageous for the following reasons. The clutch actuator of WO 2012/119612 includes a mechanical device, which is locked to a fixed state by an increased friction generated during actuation. Since the friction is not well-defined, the robustness of this device is expected to be low. The conventional clutch actuator of EP 0 561 506 compensates the wear by changing the fluid volume. During actuation the volume change is achieved by a valve element, which is normally closed. The operation of this valve is not very reliable and is, in particular, affected by the friction and the pressure differences. Moreover, sealing capabilities of the valve play a major role in its operation.

Therefore, there is a need of providing an alternative solution for adjustments to compensate for wear and tear modifications within actuators.

### Summary of the Invention

The present invention solves the above-mentioned problems by providing an apparatus according to claim 1, a vehicle clutch according to claim 13 and a vehicle brake system according to claim 14. The dependent claims refer to specifically advantageous realizations of the subject matters of the independent claims.

The present invention relates to apparatus for adjusting an actuator to compensate for wear and tear modifications. The apparatus comprises: a linear actuator configured to perform a linear actuation during normal operation, a preloading element for providing a preloading force, and a coupling element with a variable length configured to couple the linear actuator with the preloading element such that the linear actuation of the linear actuator adds an additional load (in longitudinal direction) on the preloading element. To vary its length, the coupling element comprises a first chamber, a second chamber, and at least one passage connecting the first chamber with second chamber. The first chamber and the second chamber each comprises a variable volume to enable the change of the length of the coupling element, wherein a shear-thickening fluid is filled in the first chamber and/or in the second chamber.

The term shear-thickening fluid is used for any fluid with a non-constant (e.g. a pressure-dependent) viscosity implying that the viscosity of the fluid changes with a mechanical load. In particular, such fluids may be characterized by two states: a low viscosity state and a high viscosity state. In the low viscosity state the shear-thickening fluid behaves like a liquid and in the high viscosity state the shear-thickening fluid behaves like a solid. The transition between these states may be initiated if the pressure of the fluid exceeds a threshold value. It may be continuous, but fast enough to achieve the desired effect quickly during rapid pressure changes.

In particular, if the mechanical load on the fluid and thus its pressure exceeds the given threshold value, the viscosity of the shear-thickening fluid will increase rapidly (for example within few milliseconds). Hence, during normal operation lasting typically hundreds of milliseconds, where the linear actuator is actuated to disengage/engage the clutch and an actuator force is exerted by the linear actuator, the coupling element behaves like a stiff element. This ensures a proper operation of the clutch disengagement/engagement. On the other hand, when the linear actuator is not actuated (idle periods) there is significantly less pressure applied on the shear-thickening fluid so that the fluid is in the low viscosity state and can easily pass the at least one passage. As a result, the length of the coupling element adjusts itself, thereby compensating for wear modification of the clutch.

To implement this concept, the coupling element may, in further embodiments, comprise a first portion, a second portion, and a biasing element. The first portion may be a cylindrical portion with an opening to receive the second portion such that the first portion and the second portion are able to move relative to each other to change the length of the coupling element. The biasing element may be arranged between the first portion and the second portion to provide a repulsion force acting to enlarge the length of the coupling element.

In yet another embodiment, the first chamber may be inside the cylindrical portion of the first portion and comprises a volume that changes upon changing the length the coupling member. The second chamber may be arranged at least partly outside the cylindrical portion of the first portion. The shear-thickening fluid and/or the at least one passage may be adapted to ensure that the coupling member is able to vary its length when the linear actuator is not actuated. To achieve this, the fluid should remain in the low viscosity state so that the pressure acting on the shear-thickening fluid should be below its threshold value. In other word, the length adjustment happens with a time constant (e.g. the speed) multiple times longer than a time constant for the actuation the linear actuator.

In yet another embodiment, the second chamber may be bounded by an elastic (or flexible) wall and at least partly by the second portion. The elastic wall may extend between the cylindrical portion of the first portion and the linear actuator to define the variable volume of the second chamber to be variable upon moving the first portion and second portion relative to each other.

The elastic wall may also provide a certain amount of pressure on the shear-thickening fluid in the second chamber. This pressure on the shear-thickening fluid provides a prestraining of the coupling element to extend its length in order to adjust for wear modifications of the actuator. The shear-thickening fluid and/or the elastic wall and/or the repulsion force of the biasing element are such that this default pressure is not sufficient to cause the transition of the shear-thickening fluid in the high viscosity state. Hence, during idle periods the shear-thickening fluid (although under a certain pressure) remains liquid to enable the desired wear adjustment.

In yet another embodiment, the second portion may have a cylindrical tube like shape with a closure and a plunger to define an internal cavity. The plunger may be biased by the biasing means and defines the variable volume of the second chamber. The closure may comprise the at least one passage connecting the first chamber within the first portion with the second chamber within the second portion.

In yet another embodiment, the apparatus may further comprise a first bellow inside the first portion and a second bellow. The second portion may have a cylindrical shape with a closure to define an internal cavity that includes the second bellow. The closure may comprise the at least one passage connecting the first bellow and the second bellow. The first portion may further comprise an abutment portion arranged at an end surface towards the preloading element, wherein the biasing means may be interposed between the abutment portion and a protrusion of the housing such that the biasing force acts to increase the length of the coupling element.

It should be understood, the time period during which the coupling element changes its length should not last too long, because within a typical idle period between two actuations the coupling element should, according to the present invention, adjust its length for wear compensation. Therefore, according to further embodiments, if the apparatus is in an idle state for an average duration, the coupling element balances the preloading force of the preloading element with the repulsion force of the biasing element, thereby providing the wear compensation within the average duration of the idle state. The duration of a typical idle period is more or less given. This imposes constraints on the shear-thickening fluid and/or the passage(s) to enable a sufficiently fast fluid exchange between the first and second chamber.

The apparatus may further comprise a housing with a cylindrically shaped cavity. The linear actuator may further comprise a plunger and the actuation of the linear actuator may involve a linear displacement of the plunger within the cylindrically shaped cavity.

In yet another embodiment, the coupling element may be configured to vary its length from a minimum to a maximum length, wherein the minimum and maximum length may be selected such that variations in the length of the coupling element are able to compensate for wear and tear modifications of the actuator.

In yet another embodiment, the linear actuator is driven by a pressurized actuator fluid and/or by a spring element and/or by an electromagnetic field.

The present invention relates also to an actuator with an apparatus as described before with an electromagnetic actuation means configured to provide a linear force to actuate the linear actuator.

The present invention relates also to a vehicle clutch with at least one clutch disc and an apparatus as described before that couples to the at least one clutch disc to compensate for wear and tear modifications of the at least one clutch disc.

The present invention relates also to a vehicle brake system with at least one brake disc and an apparatus as described before that couples to the at least one brake disc to compensate for wear and tear modifications of the at least one brake disc.

### Brief Description of the Drawings

Various embodiments of the present invention will be described in the following by way of examples only, and with respect to the accompanying drawings, in which:
Fig. 1 depicts an apparatus according to an embodiment of the present invention.
Fig. 2 depicts an embodiment for a hydraulic adjustment for the coupling member.
Fig. 3 depicts further aspects of the embodiment of Fig. 2.
Fig. 4 illustrates the compensation of wear and tear according to the present invention.
Fig. 5 depicts another embodiment for the coupling member according to the present invention.
Figs. 6a, b illustrate further embodiments for the coupling member.
Fig. 7 depicts another embodiment based on an electromechanical actuator.

### Detailed Description

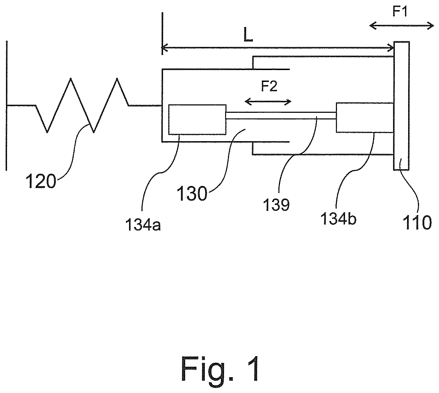

Fig. 1 depicts an apparatus for adjusting an actuator to compensate for wear and tear modifications according to an embodiment of the present invention. The apparatus comprises a linear actuator 110 for performing a linear actuation during normal operation and a preloading element 120 for providing a preloading force. The apparatus further comprises a coupling element 130 with a length L arranged to couple the linear actuator 110 with the preloading element 120 such that the linear actuation of the linear actuator 110 exerts a longitudinal force on the preloading element 120. The coupling element 130 may vary its length L with a time constant (or speed), which is multiple times longer than the time period while the linear actuator 110 performs the actuation during normal operation (e.g. disengaging the clutch).

According to the present invention, the coupling element 130 comprises a first chamber 134a and a second chamber 134b, which are connected by a passage 139 and include a shear-thickening fluid. The length adjustment of the coupling element 130 is achieved by the shear-thickening fluid flowing between the first and the second chamber 134a, 134b such that the first and/or second chamber 134a,b change their volume, thereby changing the length L of coupling element 130. The shear-thickening fluid is characterized by a transition between a low viscosity state and a high viscosity state, which is triggered by a pressure exceeding a threshold value. This fluid is selected such that in idle periods, where the fluid is subject to an adjustment force F2, the fluid is in the low viscosity state, whereas the transition to the high viscosity stated is triggered by an actuation of the linear actuator exerting an actuation force F1 (e.g. a clutch operation).

Therefore, the low viscosity enables a flow of the shear-thickening fluid between the chambers 134a,b to change the length L of the coupling element 130. On the other hand, when the linear actuator 110 is actuated, the pressure in the first and the second chamber 134a,b rapidly increases resulting a rapid increase of the viscosity of the shear-thickening fluid (being now in the high viscosity state) so that the length of the coupling element 130 is fixed and cannot be changed. According the present invention, the high viscosity of the shear-thickening fluid is such that the fluid cannot pass the passage 139 and the coupling element 130 is a rigid object.

Therefore, the length L of the coupling element 130 adjusts in idle periods, where the linear actuator 110 is not actuated, whereas during actuation of the linear actuator 110 the shear-thickening fluid ensures a stiff coupling element 130 and the actuation pressure acting on the linear actuator 110 can be transmitted directly to the preloading element 120.

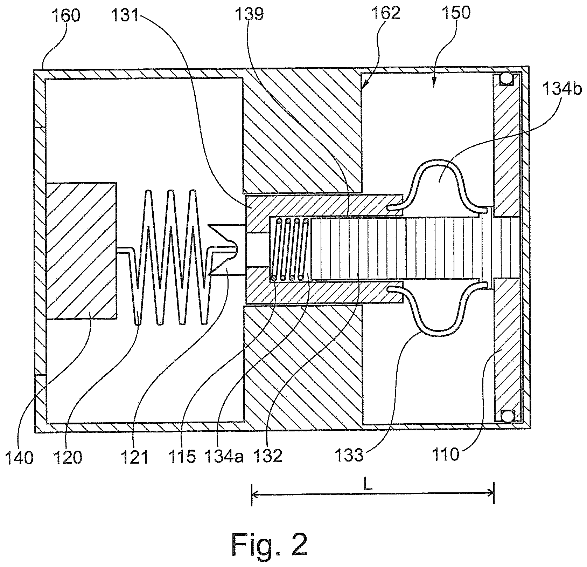

Fig. 2 depicts an embodiment, wherein the linear actuator 110 is provided in a cavity 150 of a housing 160. The cavity 150 may, for example, be a cylindrically shaped cavity within a cylindrical housing 160. In this embodiment the linear actuator 110 may be operated with a fluid or by air to move the linear actuator 110 as plunger within the cavity forward and backward. In addition, the coupling member 130 comprises a first portion 131, a second portion 132, and a biasing element 115. The first portion 131 may comprise a cylindrical shape, which is guided by a protrusion 162 of the housing 160. The second portion 132 is inserted in the cylindrically shaped first portion 131 such that it can move axially forward and backward. Between a bottom portion of the first portion 131 and the second portion 132 the first chamber 134a is formed.

The passage 139 (or gap) is provided between the second portion 132 and the cylindrically formed first portion 131 and connects the first chamber 134a with the second chamber 134b. The second chamber is arranged between the first portion 131 and the linear actuator 110 around a circumferential direction of the second portion 132. The second chamber 134b is bounded by the second portion 132 and an elastic wall 133 connected between the first portion 131 and the linear actuator 110 (or a portion attached to the linear actuator) to provide a variable volume for the second chamber 134b.

The variable volume of the second chamber 134b increases and decreases based upon a linear motion of the second portion 132 moving in the cylindrically shaped first portion 131 (like a plunger). Moreover, within the first chamber 134a, the biasing means 115 provides a biasing force between the first portion 131 and the second portion 132 acting to enlarge the length L of the coupling member 130.

The housing 160 accommodates also the preloading element 120, which extends between an attachment portion 121 at the first portion 131 and a connection part 140. The connection part 140 may be connected, for example, to a clutch or any other actuator, which is subject to the wear and tear. Therefore, as consequence of the wear and tear, the connection portion 140 will decrease its size and thus, with time, the distance between the connection part 140 and the linear actuator 110 will increase. This increased distance will be compensated for by the coupling member 130, which adjusts its length L in correspondence with the increased distance between the connection part 140 and the linear actuator 110.

Optionally, the preloading element 120 can be a compression spring, which is preloaded in order to provide a repulsion force between the connection portion 140 and the attachment part 121 coupled to the first portion 131. Likewise, the biasing element 115 may also be a compression spring, which provides a repulsion force between the first portion 131 and the second portion 132 to increase the length of the coupling member 130.

In the embodiment of Fig. 2 the clearance or passage 139 between the second portion 132 and the cylindrically-shaped first portion 131 is dimensioned such that the shear-thickening fluid in the low viscosity state may easily flow through the passage 139, but the passage 139 is too narrow for the shear-thickening fluid in the high viscosity state. The adjustment force F2 causing the coupling element 130 to adjust its length L in response to a decreased width of the connection part 140 may be much smaller than a typical actuation force F1 of the linear actuator 110 during normal operation. As set out before, the cross-sectional area of the passage 139 and/or the shear-thickening fluid may be adapted so that the forces obey the relation F2<<F1 and thus also the fluid pressure during the length adjustment is lower (being below the transition threshold) than fluid pressure during actuation (being above the transition threshold). As a consequence, during normal operation, the length L of the coupling member 130 will (ideally) remain constant and will adjust only by moving the fluid from the second chamber 134b to the first chamber 134a. This adjustment continues until a balance of forces is obtained. This balance is between for the preloading force supplied by the preloading element 120 (acts to lower the length L), the biasing force of the biasing element 115 (acts to enlarge the length L) and, finally, the elastic wall 133 providing a pressure acting on the fluid within the second chamber 134b (acts to enlarge the length L).

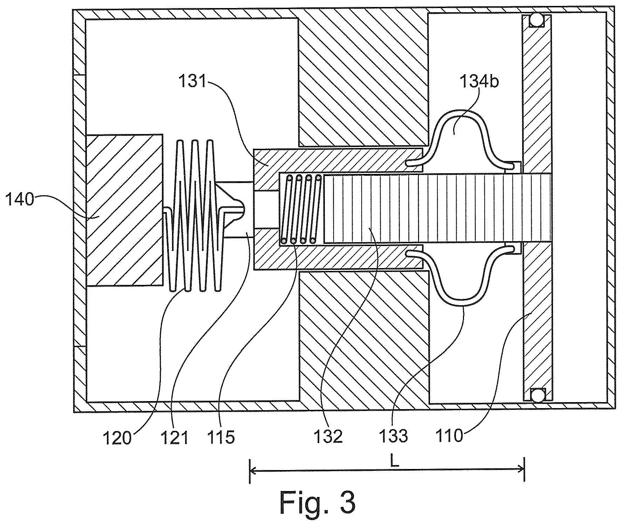

Fig. 3 illustrates further the operation of the apparatus as shown in Fig. 2. All components in Fig. 3 are equivalent to the components shown in Fig. 2. The difference in Fig. 3 is only that the linear actuator 110 has moved axially forward indicating the actuation of the linear actuator 110. This motion is provided is driven by the actuation force F1, which, as said before, is larger than a adjustment force F2, with which the coupling element 130 increases its length L. Therefore, during the motion of the linear actuator 110 as shown in Fig. 3 (compared with Fig. 2), the length L of the coupling element 130 between the attachment part 121 and the linear actuator 110 remains constant and the preloading element 120 is further pushed together. This increases the force acting on the connection part 140 and thus provides a force to an external actuator, which is actuated by this process. As said before, the passage 139 between the first portion 131 and the second portion 132 in combination with the shear-thickening fluid is selected appropriately. This means for the state in Fig. 3, within the time period, where the linear actuator 110 moves from the position in Fig. 2 to the position in Fig. 3, the second portion 132 is unable to move deeper into the first portion 131 (or only by an amount which is negligible for the operation of this device), because in this time period only a negligible amount of shear-thickening fluid (being in the high viscosity state) is able to pass the passage 139.

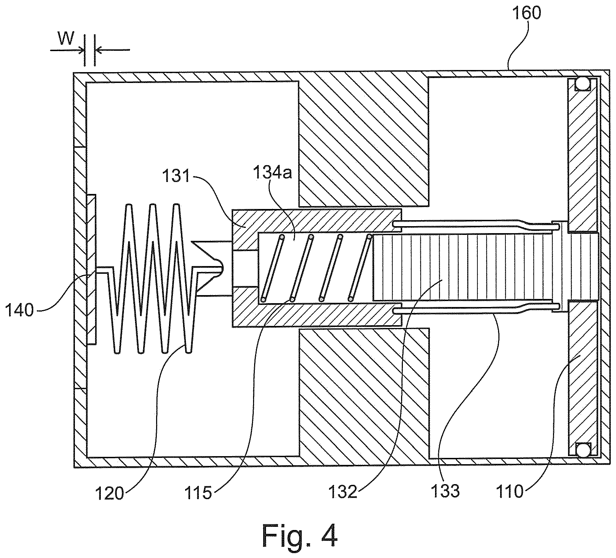

Fig. 4 relates to the embodiment as depicted in Figs. 2 and 3. However, Fig. 4 shows the situation, where the connection part 140 comprises a decreased width w. This increases the distance between the connection part 140 and the linear actuator 110. The connection part 140 may, for example, extend to the outside of the housing 160 so that, as a consequence of the wear and tear, the connection part 140 does not extend so far inside the housing 160 as, for example, shown in Figs. 2 and 3. It should be understood that the connection part 140 does not itself need to become smaller over the time of operation, but modification occur to the external actuator (e.g. a clutch; not shown) that let appear the connection part 140 to be smaller.

Since now the distance between the connection part 140 and the actuator 110 in the state of no engagement or no operation of the linear actuator 110 is enlarged, the forces provided by the pre-loading element 120 and the biasing means 115 will again balance each other. During this adaption process the first portion 131 will move, when compared to the embodiment shown in Fig. 2, further towards the connection part 140. This avoids the situation, where the preloading element 120 is fully extended. Thus there is always a minimum preload force provided. As shown in Fig. 4, the increase in the length L of the coupling element 130 is driven by the biasing force of the spring 115 to move the second portion 132 out of the first portion 131 by lowering the volume of the second chamber 134b between the elastic wall 133 and the second portion 132.

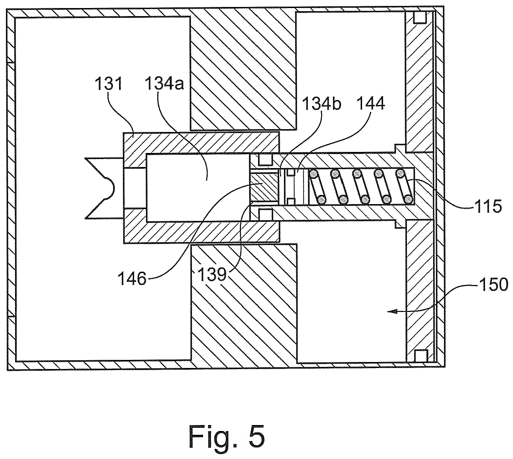

Fig. 5 depicts another embodiment for the coupling member 130, wherein the preloading element 120 and the connection part 140 are not shown. The embodiment of Fig. 5 again comprises a linear actuator 110, which moves axially within a housing 160 and Fig. 5 shows the state, where the linear actuator is not actuated. In comparison to the previous embodiments the second portion 132, the elastic wall 133 and the biasing means 115 are now replaced or arranged differently. Again, the embodiment of Fig. 5 comprises a first portion 131, which has a cylindrical shape. Within the cylindrically shaped first portion 131 the first chamber 134a is provided. The first chamber 134a is bounded by a piston type second portion 132. The piston-type second portion 132 also has a cylindrical shape such that it can move inside the first portion 131 and provides in its interior the second chamber 134b. The second chamber 134b is bounded by a lower wall 144, which is movable within the second portion 132 while being biased by a biasing means 115, thereby providing a pressure force acting to lower the volume of the second chamber 134b that is provided by the biasing element 115. In addition, the second portion 132 comprises a closure or separation wall 146 with one or more passages 139, wherein the passages 139 connect the first chamber 134a within the first portion 131 and the second chamber 134b within the second portion 132.

As for the previous embodiments, also in this embodiment the cross-sectional area of the passages 139 in combination with the shear-thickening fluid within the first chamber 134a and the second chamber 134b are chosen such that the adjustment force v2 is below the threshold triggering the transition to the high viscosity sate. As a result, the coupling element 130 can decrease its length L in idle periods. On the other hand, the actuation force F1 triggers the transition to the high viscosity state in which the fluid cannot pass the passage 139.

In this embodiment, the second portion 132 should have a sealing connection with the first portion 131 (and not a clearance as in the embodiment of Fig. 2) to ensure that the shear-thickening fluid within the first chamber 134a can only move into the second chamber 134b through the passages 139, but not in the cavity 150.

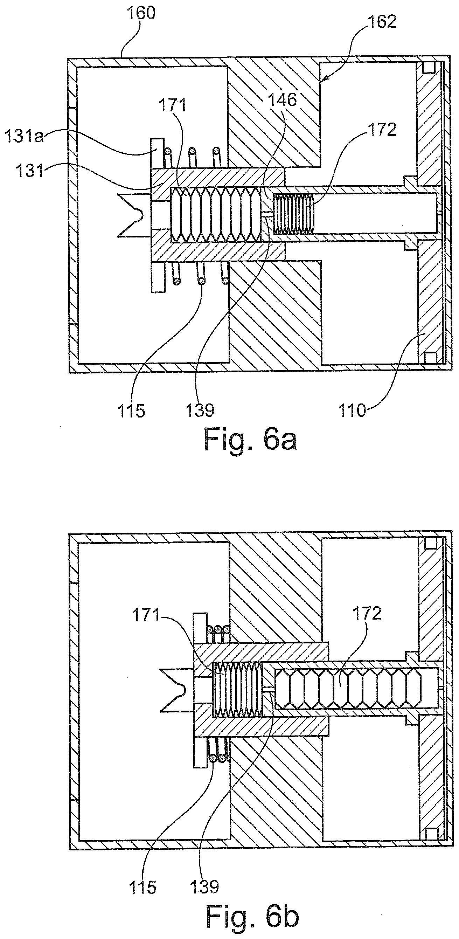

Figs. 6a and 6b illustrate yet another embodiment, which differs from the embodiment shown in Fig. 5 in that, the first chamber 134a is provided within a first bellow 171 arranged within the first portion 131. Similarly, the second chamber 134b is provided within a second bellow 172 provided within the cylindrically shaped second portion 132. The first bellow 171 and the second bellow 172 are connected via the passage 139 which again is provided in the separation wall 146 between the second portion 132 and the first portion 131. The separation wall 146 represents a closure for the second portion 132.

In this embodiment, the biasing means 115 is arranged between the first portion 131 and a protrusion 162 extending from the housing 160. For example, the first portion 131 may comprise an abutment portion 131a which provides an abutment for the biasing means 115 such that the biasing means 115 provides a repulsion force pushing the first portion 131 away from the linear actuator 110, thus acting in the same way as the biasing means in the embodiments shown in Figs. 2 and 5.

Fig. 6b shows the same embodiment as of Fig. 6a, but in the state, where the biasing means 115 is fully compressed, thereby pushing the shear-thickening fluid out of the first bellow 171 through the passage 139 into the second bellow 172 which provides the second chamber 134b.

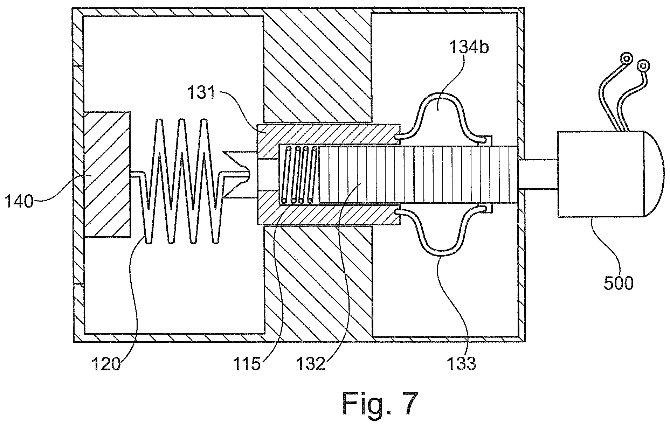

Fig. 7 shows another embodiment, wherein the components of the apparatus are the same as in the embodiment of Fig. 2. However, in the embodiment of Fig. 7, the linear actuator 110 is given by an electromagnet or an electromechanical component 500 which is able to move linearly the coupling member 130 in the direction forward the connection part 140, thereby providing the same function as the linear actuator 110 described with the embodiment of Figs. 2 and 3. The actuator 500 may be connected to a control unit which is configured to provide a control signal thereby actuating the actuator 500 and providing the respective force, for example, for engaging or disengaging the exemplary clutch or brake system.

The desired effect as described previously can be achieved in all embodiments as shown in Figs. 2 to 7 by any shear-thickening fluid, because this material allows different operation modes characterized by different viscosities.

In a first mode, a given smaller viscosity of the fluid enables the adjustment of the needed fluid content inside the chamber(s) of the adjuster (the apparatus). Even when a limited axial force is applied on the fluid, the smaller viscosity ensures that an amount of fluid can flow through the passage 139 from one chamber to the other in order to adjust the length L of the coupling element 130. The passage 139 (gap or hole) is, according to the present invention, dimensioned such that the fluid with the smaller viscosity can flow through the passage 139 within a typical time period, where the clutch is in the idle state. Thus, the amount of fluid needed for the length adjustment can be exchanged between the chambers 134a,b. In a typical vehicle application, the idle period and thus time for adjusting the clutch wear is relatively long compared to the actuation time (i.e. disengaging or engaging) of the clutch.

In the second mode, the fluid or the filling material has a high viscosity (or a high stiffness) so that a relatively high force during the clutch actuation can be transmitted from one driving element (e.g. the actuator 110) to the second driving element (e.g. the friction element 140) in relatively short time. The driving elements (e.g. the cylinder or piston of the actuator 110) operate in the working chamber of the adjuster. The high viscosity avoids that the fluid can leave the chamber over the appropriate dimensioned passage under the load (e.g. at high actuation force).

The shear-thickening fluid (also termed as dilatant or rheologically complex fluid) is a material, which ensures the viscosity increase with the rate of shear strain. Shear-thickening fluids behave like a solid, when it encounters mechanical stress or shear and flows like a liquid until an object strikes or agitates it forcefully. As consequence of a strike or an implied pressure, it hardens in a few milliseconds. As a result the shear-thickening fluid is especially suitable for ensuring the above behavior, since a clutch actuator application implying an increased pressure a relatively high viscosity is needed so that the coupling element behaves like a solid during the clutch operation (e.g. in a short time). On the other hand, at a fully engaged clutch, when the actuator force is very small or about zero for a long period in time (idle time), a relatively low viscosity is achieved so that the fluid is liquid and can facilitate adjustments of the clutch wear.

Advantageous aspects of the various embodiments can be summarized as follows:
Embodiments of the present invention aim to eliminate the disadvantages of the conventional adjusting clutch actuators using a shear-thickening fluid and walls. The compensation of wear according to embodiments is made possible not only for a clutch mechanism, but also for any other actuator device (e.g. between the release bearing and a transmitter of the longitudinal force of the actuator). According to the present invention the actuator operates in the same operational interval, even when the clutch is subject to wear.

Embodiments are characterized by utilizing the effect that a high viscosity state of the shear-thickening fluid limits the flow over the limited gap - even at high compression forces. The viscous fluid needs time to leave the internal chambers and this time is not available during the clutch actuations. However, this time is available in a fully engaged state of the clutch, when a slight decompression force is present and has to be compensated.

The linear actuator of Fig. 2 is operated by compressed air, for example, through a main piston 110 against an elastic element 120 which could be a spring of the transmission clutch of the vehicle or a brake caliper or any other vehicle component. The operation results in a wear and tear in a friction element and was related to variations in the width (or thickness) of the coupling part 140. These elements are pre-stressed by the actuator 110. The adjusting device according to embodiments is formed between the elastic element 120 and the actuator piston 110 in order to compensate for a size change of the friction element 140 caused by the wear. The adjustor comprises an inner piston (the second portion 132), which is guided in a chamber (the first portion 131) filled out by a shear-thickening fluid (not shown in the Figure). Due to the tolerances or intended design diameter differences of the clearance 139 of the inner piston 132 and the chamber 131, the shear-thickening fluid is able to flow into the additional variable volume, which is closed by an elastic wall 133. In accordance with this structure, the desired volume change in the chamber 131 for the wear is compensated by the shear-thickening fluid flow from the additional volume of the chamber 131 through the small channel 139 formed by the inner piston 132 and the chamber tolerances. The static position of the adjustor is defined by a force balance of the elastic element 120, the force of the elastic wall 133 and a force exerted by a further elastic element (the biasing element 115) between the piston 132 and the chamber 131.

In case the size of the friction element 140 decreases, the force of the elastic element 120 will decrease causing a change in the force balance. The unbalanced forces will generate a movement driven by the force of the elastic wall 133 and the additional elastic element 115 moving the chamber 131 in the direction of the friction element 140 until the forces are balanced again. In parallel hereto, the fluid flow compensates the volume change inside the chamber 131. This procedure provides an adjustment of the system reacting on the wear.

Over the whole range of position adjustment the rate of shear of the fluid as, for example, resulting from stress applied by the elastic element, should remain below a given threshold value so that the shear-thickening fluid remains liquid (the low viscosity state), whenever the linear actuator 110 is not actuated. The elastic element 115 and the elastic wall 133 do not provide enough pressure to increase the viscosity of the shear-thickening fluid, i.e. this pressure is not sufficient to switch the shear-thickening fluid from the low viscosity state to the high viscosity state.

The shear-thickening fluid is selected such that the low viscosity state provides enough viscosity so that the fluid can pass the passage 139. Or, alternatively, the passage 139 is selected such that (for example with respect to its diameter) the shear-thickening fluid in its low viscosity state can pass the passage 139 over a typical time period corresponding to a typical idle period of the clutch during normal driving conditions (e.g. between several minutes to several hours).

However, during operation of the actuator by the main piston 110, the inner piston 132 will increase the pressure in the chamber 131, but a volume change in the chamber 131 is intended to be avoided in order to provide the full actuation force against the elastic element 120. In order to achieve the high viscosity state, the rate of shear of the fluid resulting from the applied stress by the linear actuator 110 has to exceed the given threshold value. In other words, the shear-thickening fluid should also be selected such that the normally applied pressure on the linear actuator will result into sufficient pressure acting on the shear-thickening fluid to enable the transition from the low viscosity state to the high viscosity state. Also this condition may be translated into geometrical constraints on the first chamber 134a or the second chamber 134b. For example, they may be adapted so that the cross-sectional area, on which the applied pressure of the linear actuator 110 acts, ensures that the pressure is sufficiently high to enable the transition from the low viscosity state to the high viscosity state within a short period of time (for example within a time period not exceeding, for example, 10 milliseconds). Using a small gap between the inner piston 132 and the chamber 131 and a high viscosity, the amount of fluid flow will be low, even at high fluid pressure.

Usually, the operation of the actuator is less than 10% of the total life of the actuator. Therefore, significant fluid flow for adjustment is possible during idle phases, while the amount of fluid flow during operation is negligible. The reason for this is that the amount of the volume change of the chamber is the time integral of the fluid flow. Therefore, in a short time, the volume change will be negligible compared to the volume change over longer time. The method is theoretically applicable in systems where the operation time is less than 50% of the total lifetime without specifying further parameters.

Fig. 5 showed another design using a piston instead of an elastic wall, wherein the additional volume was realized inside of an inner piston while the fluid flow was ensured by bores on the front surface of the inner piston. In this case, the chamber shall be sealed in the gap between the chamber and the inner piston. A further piston is formed inside the inner piston to allow an increase of the fluid flow inside the inner piston. The elastic wall and the additional elastic element were substituted by one single elastic element connected to the piston inside the inner piston setting up the force balance.

Fig. 6 showed yet another realization, where the fluid volumes were both closed by the elastic chambers having the bores a fluid connection in between. An additional elastic element, which is used to set the idle-pre-stress of the friction element, is placed between the chamber and the housing. This can be an alternative realization for all of the previous presented structures.

Fig. 7 showed yet another actuation principle, where the actuator is operated from an electromagnetic source (for example by an electromotor), instead of a pneumatic actuation. It is understood, that the adjustor concept is not restricted to any type of actuation principle.

Major aspects of the present invention provide, in particular, the following advantages:
The present invention aims to create and construct adjustor solutions which are as simple as possible in order to avoid the implementation of many large and heavy parts in the actuator system or between the actuator and the release bearing (included in clutch mechanisms). In addition, embodiments provide simple solutions that also improve the lifetime and reduce the weight of the clutch actuator which are major issues for modern vehicle manufacturers in order to reduce the overall fuel consumption of the motor vehicle. Specific aspects of the adjustors are the following:
   - The expected stroke (= position deviation) that has to be compensated for due to disc wear is much smaller than the operational stroke of the clutch actuator (deviation between fully engaged and fully disengaged positions) in short time.
   - The actuation of the clutch (disengagement or engagement) happens in a relatively short time period compared to the time period available to wear compensation. Wearing processes are much slower as compared to the clutch actuation process. The clutch in a motor vehicle is in general significantly longer engaged (i.e. not in the actuated state) than it is partly or fully disengaged (actuated state).

Further advantageous embodiments of the present invention relate to an adjustor device that is built in a linear actuator, which is operated against a first elastic element in less than 50% of the total time. The adjuster device may further contain a cylinder and piston parts including a first chamber filled with a fluid and having a fluid connection to a second chamber having a variable volume defined by a closure by a second elastic element. The adjustor device may further be configured to balance a force of the first and second elastic elements by moving the piston and by a fluid flow from the first chamber to the second chamber. The adjustor device may be characterized in that an effective cross-section of the fluid connection is designed in accordance with the overall viscosity of the fluid in order to slow down the balancing linear movement of the device to a negligible low value when the actuator is operated.

Another embodiments relates to an adjustor device, which is characterized in that the second elastic elements are integrated.

A further embodiment relates to an adjustor device, which is characterized in that the volume of the second chamber is changed by a spring-loaded piston or by an elastic wall of the chamber.

In a further embodiment the adjustor device is characterized in that an operation force of the linear actuator is applied to the piston.

In a further embodiment the adjustor device is characterized in that the fluid is a rheologically complex liquid, which is shear-thickening, i.e. which viscous resistance or viscosity increases with increasing deformation or shear rate.

In a further embodiment, the adjustor device is characterized in that the operation force of the linear actuator is generated by a fluid pressure and/or a spring element and/or an electromagnetic field.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 110: linear actuator
- 115: biasing element
- 120: preloading element
- 130: coupling element
- 131: first portion
- 131a: abutment portion
- 132: second portion
- 133: elastic wall
- 134a, b: first and second chamber
- 139: at least one passage
- 144: plunger
- 146: closure
- 150: cavity
- 160: housing
- 162: protrusion of housing
- 500: actuator
- v1: first velocity
- v2: second velocity

## Claims

1. Apparatus for wear compensation for an actuator, the apparatus comprising:
a linear actuator (110) for performing a linear actuation during normal operation;
a preloading element (120) for providing a preloading force;
a coupling element (130) with a variable length (L) for coupling the linear actuator (110) with the preloading element (120) such that the linear actuation of the linear actuator (110) exerts a linear force on the preloading element (120), wherein the coupling element (130) comprises a first chamber (134a), a second chamber (134b), and at least one passage (139) connecting the first chamber (134a) with second chamber (134b), the first chamber (134a) and the second chamber (134b) each comprising a variable volume to enable a change of the length (L); **characterized by** a shear-thickening fluid filling the first chamber (134a) and/or the second chamber (134b), the shear-thickening fluid being in a high viscosity state that suppresses a flow through the at least one passage (139) during the linear actuation of the linear actuator (110).

2. The apparatus according to claim 1, wherein the coupling element (130) comprises a first portion (131), a second portion (132), and a biasing element (115), the first portion (131) being a cylindrical portion with an opening to receive the second portion (132) such that the first portion (131) and the second portion (132) are able to move relative to each other to change the length (L) of the coupling element (130),
the biasing element (115) being arranged between the first portion (131) and the second portion (132) to provide a repulsion force acting to enlarge the length (L) of the coupling element (130).

3. The apparatus according to claim 2, wherein
the first chamber (134a) being inside the cylindrical portion of the first portion (131) and the second chamber (134b) being arranged at least partly outside the cylindrical portion of the first portion (131),
wherein the shear-thickening fluid and/or the at least one passage (139) are adapted to ensure that coupling member (130) is able to vary its length (L) without an actuation of the linear actuator (110).

4. The apparatus according claim 3, wherein the cross-sectional area of the at least one passage (139) and/or the shear-thickening fluid is selected to ensure that the time constant of the variation of the length (L) of the coupling member (130) without an actuation of the linear actuator (110) is multiple times longer than the time constant for the actuation the linear actuator (110).

5. The apparatus according to claim 3 or claim 4, the second chamber (134b) being bounded by an elastic wall (133) and by at least part of the second portion (132), the elastic wall (133) extending between the cylindrical portion of the first portion (131) and the linear actuator (110) to define the variable volume of the second chamber (134b) being variable upon moving the first portion (131) and second portion (132) relative to each other.

6. The apparatus according to claim 3 or claim 4, wherein the second portion (132) has a cylindrical tube-like shape with a closure (146) and a plunger (144) to define an internal cavity, the plunger (144) being biased by the biasing means (115) to define the second cavity (134b) with the variable volume in the internal cavity,
wherein the closure (146) comprises the at least one passage (139) connecting the first cavity (134a) within the first portion (131) with the second cavity (134b) within the second portion (132).

7. The apparatus according to claim 3 or claim 4, further comprising a first bellow (171) inside the first portion (131) and a second bellow (172), the second portion (132) having a cylindrical shape with a closure (146) to define an internal cavity that includes the second bellow (172), the closure (146) comprising the at least one passage (139), the first bellow (171) and the second bellow (172) being connected by the at least one passage (139) through the closure (146),
the first portion (131) further comprising an abutment portion (131a) arranged at an end surface towards the preloading element (120), wherein the biasing means (115) is interposed between the abutment portion (131a) and a protrusion (162) of a housing (160) such that the biasing force acts towards an increased length (L) of the coupling element (130).

8. The apparatus according to any one of claims 2 to 7, the apparatus being in an idle state for an average duration between subsequent linear actuations of the linear actuator (110), the coupling element (130) being configured to balance the preloading force of the preloading element (120) with the repulsion force of the biasing element (115), thereby providing the wear compensation within the average duration of the idle state.

9. The apparatus according any one of the preceding claims, further comprising a housing (160) with a cylindrically shaped cavity (150), wherein the linear actuator (110) comprises a plunger and the actuation of the linear actuator involves a linear displacement of the plunger within the cylindrically shaped cavity (150).

10. The apparatus according to any one of the preceding claims, wherein the coupling element (130) is configured to vary its length (L) from a minimum length to a maximum length and wherein the minimum length and the maximum length are selected such that variations in the length (L) of the coupling element (130) are able to compensate for wear and tear modifications of the actuator.

11. The apparatus according to any one of the preceding claims, wherein the linear actuator (110) is driven by a pressurized fluid and/or by a spring element and/or by an electromagnetic field.

12. An actuator with an apparatus according to any one of claims 1 to 11, with an electromagnetic actuation means configured to provide a linear force to actuate the linear actuator (110).

13. A vehicle clutch with at least one clutch disc and an apparatus according to any one of the claims 1 to 11, the apparatus coupling to the at least one clutch disc to compensate for wear modifications of the at least one clutch disc.

14. A vehicle brake system with at least one brake disc and an apparatus according to any one of the claims 1 to 11, the apparatus coupling to the at least one brake disc to compensate for wear modifications of the at least one brake disc.

## Patentansprüche

1. Vorrichtung zur Verschleißkompensierung für einen Aktuator, wobei die Vorrichtung aufweist:
einen Linearaktuator (110) zum Ausführen einer linearen Betätigung während eines normalen Betriebs;
ein Vorspannelement (120) zum Bereitstellen einer Vorspannkraft;
ein Kopplungselement (130) mit variabler Länge (L) zum Koppeln des Linearaktuators (110) mit dem Vorspannelement (120) derart, dass die lineare Betätigung des Linearaktuators (110) eine lineare Kraft auf das Vorspannelement (120) ausübt, wobei das Kopplungselement (130) eine erste Kammer (134a), eine zweite Kammer (134b) und mindestens einen Durchgang (139) aufweist, der die erste Kammer (134a) mit der zweiten Kammer (134b) verbindet, wobei die erste Kammer (134a) und die zweite Kammer (134b) jeweils ein variables Volumen aufweisen, um eine Änderung der Länge (L) zu ermöglichen;
**gekennzeichnet dadurch, dass**
ein scherverdickendes Fluid die erste Kammer (134a) und/oder die zweite Kammer (134b) füllt, wobei das scherverdickende Fluid in einem hochviskosen Zustand vorliegt, der eine Strömung durch den mindestens einen Durchgang (139) während der linearen Betätigung des Linearaktuators (110) unterdrückt.

2. Vorrichtung nach Anspruch 1, wobei das Kopplungselement (130) einen ersten Abschnitt (131), einen zweiten Abschnitt (132) und ein Vorspannungselement (115) aufweist,
wobei der erste Abschnitt (131) ein zylindrischer Abschnitt mit einer Öffnung zum Aufnehmen des zweiten Abschnitts (132) ist, so dass sich der erste Abschnitt (131) und der zweite Abschnitt (132) relativ zueinander bewegen können, um die Länge (L) des Kopplungselements (130) zu ändern,
wobei das Vorspannungselement (115) zwischen dem ersten Abschnitt (131) und dem zweiten Abschnitt (132) angeordnet ist, um eine Rückstoßkraft bereitzustellen, die wirkt, um die Länge (L) des Kopplungselements (130) zu vergrößern.

3. Vorrichtung nach Anspruch 2, wobei
die erste Kammer (134a) sich innerhalb des zylindrischen Abschnitts des ersten Abschnitts (131) befindet und die zweite Kammer (134b) mindestens teilweise außerhalb des zylindrischen Abschnitts des ersten Abschnitts (131) angeordnet ist,
wobei das scherverdickende Fluid und/oder der mindestens eine Durchgang (139) dazu angepasst sind, sicherzustellen, dass das Kopplungselement (130) seine Länge (L) ohne eine Betätigung des Linearaktuators (110) variieren kann.

4. Vorrichtung nach Anspruch 3, wobei die Querschnittsfläche des mindestens einen Durchgangs (139) und/oder des scherverdickenden Fluids so gewählt sind, dass die Zeitkonstante der Variation der Länge (L) des Kopplungselements (130) ohne eine Betätigung des Linearaktuators (110) um ein Mehrfaches länger als die Zeitkonstante für die Betätigung des Linearaktuators (110) ist.

5. Vorrichtung nach Anspruch 3 oder Anspruch 4, wobei die zweite Kammer (134b) durch eine elastische Wand (133) und mindestens einen Teil des zweiten Abschnitts (132) begrenzt ist, wobei sich die elastische Wand (133) zwischen dem zylindrischen Abschnitt des ersten Abschnitts (131) und dem Linearaktuator (110) erstreckt, um das variable Volumen der zweiten Kammer (134b) zu definieren, beim Bewegen des ersten Abschnitts (131) und des zweiten Abschnitts (132) relativ zueinander variabel zu sein.

6. Vorrichtung nach Anspruch 3 oder Anspruch 4, wobei der zweite Abschnitt (132) eine zylindrische röhrenartige Form mit einem Verschluss (146) und einem Kolben (144) aufweist, um einen inneren Hohlraum zu definieren, wobei der Kolben (144) durch das Vorspannungsmittel (115) vorgespannt wird, um den zweiten Hohlraum (134b) mit dem variablen Volumen im inneren Hohlraum zu definieren,
wobei der Verschluss (146) den mindestens einen Durchgang (139) aufweist, der den ersten Hohlraum (134a) innerhalb des ersten Abschnitts (131) mit dem zweiten Hohlraum (134b) innerhalb des zweiten Abschnitts (132) verbindet.

7. Vorrichtung nach Anspruch 3 oder Anspruch 4, ferner aufweisend einen ersten Balg (171) innerhalb des ersten Abschnitts (131) und einen zweiten Balg (172), wobei der zweite Abschnitt (132) eine zylindrische Form mit einem Verschluss (146) aufweist, um einen inneren Hohlraum zu definieren, der den zweiten Balg (172) enthält, wobei der Verschluss (146) den mindestens einen Durchgang (139) aufweist, wobei der erste Balg (171) und der zweite Balg (172) durch den mindestens einen Durchgang (139) durch den Verschluss (146) verbunden sind,
wobei der erste Abschnitt (131) ferner einen Anschlagabschnitt (131a) aufweist, der an einer Endfläche in Richtung des Vorspannelements (120) angeordnet ist, wobei das Vorspannungsmittel (115) zwischen dem Anschlagabschnitt (131a) und einem Vorsprung (162) eines Gehäuses (160) derart angeordnet ist, dass die Vorspannungskraft in Richtung einer vergrößerten Länge (L) des Kopplungselements (130) wirkt.

8. Vorrichtung nach einem der Ansprüche 2 bis 7, wobei die Vorrichtung sich zwischen aufeinanderfolgenden linearen Betätigungen des Linearaktuators (110) für eine mittlere Dauer in einem Ruhezustand befindet, wobei das Kopplungselement (130) zum Ausgleichen der Vorspannkraft des Vorspannelements (120) mit der Rückstoßkraft des Vorspannungselements (115) ausgelegt ist, wodurch die Verschleißkompensierung innerhalb der mittleren Dauer des Ruhezustands bereitgestellt wird.

9. Vorrichtung nach einem der vorhergehenden Ansprüche, ferner aufweisend ein Gehäuse (160) mit einem zylindrisch geformten Hohlraum (150), wobei der Linearaktuator (110) einen Kolben aufweist und die Betätigung des Linearaktuators eine lineare Verschiebung des Kolbens innerhalb des zylindrisch geformten Hohlraums (150) beinhaltet.

10. Vorrichtung nach einem der vorhergehenden Ansprüche, wobei das Kopplungselement (130) ausgelegt ist, seine Länge (L) von einer minimalen Länge auf eine maximale Länge zu variieren, und wobei die minimale Länge und die maximale Länge so gewählt sind, dass Variationen in der Länge (L) des Kopplungselements (130) Verschleiß- und Bruchmodifizierungen des Aktuators kompensieren können.

11. Vorrichtung nach einem der vorhergehenden Ansprüche, wobei der Linearaktuator (110) von einem Druckfluid und/oder von einem Federelement und/oder von einem elektromagnetischen Feld angetrieben wird.

12. Aktuator mit einer Vorrichtung nach einem der Ansprüche 1 bis 11, mit einer elektromagnetischen Betätigungseinrichtung, die ausgelegt ist, eine lineare Kraft zum Betätigen des Linearaktuators (110) bereitzustellen.

13. Fahrzeugkupplung mit mindestens einer Kupplungsscheibe und einer Vorrichtung nach einem der Ansprüche 1 bis 11, wobei die Vorrichtung an die mindestens eine Kupplungsscheibe koppelt, um Verschleißmodifizierungen der mindestens einen Kupplungsscheibe zu kompensieren.

14. Fahrzeugbremssystem mit mindestens einer Bremsscheibe und einer Vorrichtung nach einem der Ansprüche 1 bis 11, wobei die Vorrichtung an die mindestens eine Bremsscheibe koppelt, um Verschleißmodifizierungen der mindestens einen Bremsscheibe zu kompensieren.

## Revendications

1. Dispositif de compensation d'usure pour un actionneur, le dispositif comprenant :
un actionneur (110) linéaire pour effectuer un actionnement linéaire pendant un fonctionnement normal;
un élément (120) de précharge pour appliquer une force de précharge;
un élément (130) d'accouplement de longueur (L) variable pour accoupler l'actionneur (110) linéaire à l'élément (120) de précharge, de manière à ce que l'actionnement linéaire de l'actionneur (110) linéaire applique une force linéaire à l'élément (120) de précharge, dans lequel l'élément (130) d'accouplement comprend une première chambre (134a), une deuxième chambre (134b) et au moins un passage (139) mettant la première chambre (134a) en communication avec la deuxième chambre (134b), la première chambre (134a) et la deuxième chambre (134b) ayant chacune un volume variable pour permettre un changement de la longueur (L);
**caractérisé par**
un fluide de rhéoépaississement remplissant la première chambre (134a) et/ou la deuxième chambre (134b), le fluide de rhéoépaississement étant dans un état de grande viscosité, qui supprime un écoulement dans le au moins un passage (139) pendant l'actionnement linéaire de l'actionneur (110) linéaire.

2. Dispositif suivant la revendication 1, dans lequel l'élément (130) d'accouplement comprend une première partie (131), une deuxième partie (132) et un élément (115) de sollicitation, la première partie (131) étant une partie cylindrique ayant une ouverture pour recevoir la deuxième partie (132), de manière à ce que la première partie (131) et la deuxième partie (132) puissent se déplacer l'une par rapport à l'autre pour changer la longueur (L) de l'élément (130) d'accouplement,
l'élément (115) de sollicitation étant disposé entre la première partie (131) et la deuxième partie (132) pour appliquer une force de répulsion agissant pour augmenter la longueur (L) de l'élément (130) d'accouplement.

3. Dispositif suivant la revendication 2, dans lequel la première chambre (134a) est à l'intérieur de la partie cylindrique de la première partie (131) et la deuxième chambre (134b) est disposée, au moins en partie, à l'extérieur de la partie cylindrique de la première partie (131),
dans lequel le fluide de rhéoépaississement et/ou le au moins un passage (139) sont adaptés pour assurer que l'élément (130) d'accouplement est apte à modifier sa longueur (L) sans un actionnement de l'actionneur (110) linéaire.

4. Dispositif suivant la revendication 3, dans lequel la surface de section transversale du au moins un passage (139) et/ou le fluide de rhéoépaississement est choisi pour assurer que la constante de temps de la variation de la longueur (L) de l'élément (130) d'accouplement, sans un actionnement de l'actionneur (110) linéaire, soit plusieurs fois plus grande que la constante de temps pour l'actionnement de l'actionneur (110) linéaire.

5. Dispositif suivant la revendication 3 ou la revendication 4, la deuxième chambre (134b) étant délimitée par une paroi (133) élastique et par au moins une partie de la deuxième partie (132), la paroi (133) élastique s'étendant entre la partie cylindrique de la première partie (131) et l'actionneur (110) linéaire pour définir le volume variable de la deuxième chambre (134b), variable par déplacement de la première partie (131) et de la deuxième partie (132) l'une par rapport à l'autre.

6. Dispositif suivant la revendication 3 ou la revendication 4, dans lequel la deuxième partie (132) a une forme analogue à un tube cylindrique ayant une fermeture (146) et un plongeur (144) pour définir une cavité interne, le plongeur (144) étant sollicité par le moyen (115) de sollicitation pour définir la deuxième cavité (134b) de volume variable dans la cavité interne,
dans lequel la fermeture (146) comprend le au moins un passage (139) mettant la première cavité (134a) dans la première partie (131) en communication avec la deuxième cavité (134b) dans la deuxième partie (132).

7. Dispositif suivant la revendication 3 ou 4, comprenant en outre un premier soufflet (171) à l'intérieur de la première partie (131) et un deuxième soufflet (172), la deuxième partie (132) ayant une forme cylindrique avec une fermeture (146) pour définir une cavité interne, qui inclut le deuxième soufflet (172), la fermeture (146) comprenant le au moins un passage (139), le premier soufflet (171) et le deuxième soufflet (172) étant relié par le au moins un passage (139) à travers la fermeture (146),
la première partie (131) comprenant en outre une partie (131a) de butée disposée à une surface d'extrémité vers l'élément (120) de précharge, l'élément (115) de sollicitation étant interposé entre la partie (131a) de butée et une saillie (162) d'une enveloppe (160), de manière à ce que la force de sollicitation tende à augmenter la longueur (L) de l'élément (130) d'accouplement.

8. Dispositif suivant l'une quelconque des revendications 2 à 7, le dispositif étant dans un état de repos pendant une durée moyenne entre des actionnements linéaires consécutifs de l'actionneur (110) linéaire, l'élément (130) d'accouplement étant configuré pour équilibrer la force de précharge de l'élément (120) de précharge et la force de répulsion de l'élément (115) de sollicitation, en procurant ainsi la compensation d'usure dans la durée moyenne de l'état de repos.

9. Dispositif suivant l'une quelconque des revendications précédentes, comprenant en outre une enveloppe (160) ayant une cavité (150) conformée cylindriquement, l'actionneur (110) linéaire comprenant un plongeur et l'actionnement de l'actionneur linéaire impliquant un déplacement linéaire du plongeur dans la cavité (150) conformée cylindriquement.

10. Dispositif suivant l'une quelconque des revendications précédentes, dans lequel l'élément (130) d'accouplement est configuré pour modifier sa longueur (L) d'une longueur minimum à une longueur maximum et dans lequel la longueur minimum et la longueur maximum sont choisies de manière à ce que des modifications de la longueur (L) de l'élément (130) d'accouplement puissent compenser des modifications dues à l'usure et à la déchirure de l'actionneur.

11. Dispositif suivant l'une quelconque des revendications précédentes, dans lequel l'actionneur (110) linéaire est entraîné par un fluide sous pression et/ou par un élément de ressort et/ou par un champ électromagnétique.

12. Actionneur ayant un dispositif suivant l'une quelconque des revendication 1 à 11, comprenant un moyen électromagnétique d'actionnement configuré pour appliquer une force linéaire afin d'actionner l'actionneur (110) linéaire.

13. Embrayage de véhicule ayant au moins un disque d'embrayage et un dispositif suivant l'une quelconque des revendications 1 à 11, le dispositif s'accouplant au au moins un disque d'embrayage pour compenser des modifications dues à l'usure du au moins un disque d'embrayage.

14. Système de freinage de véhicule ayant au moins un disque de frein et un dispositif suivant l'une quelconque des revendications 1 à 11, le dispositif s'accouplant au au moins un disque de frein pour compenser des modifications dues à l'usure du au moins un disque de frein.
